# EUROPÄISCHE PATENTANMELDUNG

(11) **EP 4 613 717 A1**
(43) Veröffentlichungstag der Anmeldung: **10.09.2025**
(21) Anmeldenummer: 24162074.9
(22) Anmeldetag: 07.03.2024
(51) Int. Cl.: C02F 3/28, C02F 103/28

(54) **REAKTOR ZUR ANAEROBEN ABWASSER- UND/ODER PROZESSWASSERREINIGUNG MIT VERBESSERTER KAPAZITÄT**

(71) Anmelder: MERI Environmental Solutions GmbH, 81243 München (DE)
(72) Erfinder: RONGA, Manlio, 80999 München (DE); TROUBOUNIS, Georgios, 81735 München (DE); PITA COELHO, Rosa Elena, 84072 Au i.d. Hallertau (DE)
(74) Vertreter: Henkel & Partner mbB

(57) **Zusammenfassung**

Die vorliegende Erfindung betrifft einen Reaktor zur anaeroben Reinigung von Abwasser und/oder Prozesswasser, welcher umfasst:
a) einen Reaktorbehälter,
b) wenigstens eine im unteren Bereich des Reaktorbehälters angeordnete Zulaufleitung zur Zuführung von zu reinigendem Abwasser und/oder Prozesswasser in den Reaktor,
c) wenigstens einen im oberen Bereich des Reaktorbehälters angeordneten Klarwasserabzug zum Abführen von gereinigtem Wasser aus dem Reaktor,
d) einen in dem Reaktorbehälter angeordneten, Gashauben umfassenden Gasabscheider,
e) wenigstens eine oberhalb des Klarwasserabzugs angeordnete Gas-/Flüssig-Trenneinrichtung,
f) wenigstens eine Steigleitung, welche den Gasabscheider mit der wenigstens einen Gas-/Flüssig-Trenneinrichtung verbindet, und
g) wenigstens eine Sinkleitung, die von der Gas-/Flüssig-Trenneinrichtung in einen unterhalb des Klarwasserabzugs liegenden Bereich des Reaktors führt,
dadurch gekennzeichnet, dass der Gasabscheider mindestens vier übereinanderliegende Lagen von Gashauben umfasst und der Reaktor keinen weiteren Gasabscheider aufweist.

## Beschreibung

Die vorliegende Erfindung betrifft einen Reaktor zur anaeroben Reinigung von Abwasser und/oder Prozesswasser, wie insbesondere von Abwasser aus der Papierindustrie und/oder Prozesswasser in der Papierindustrie, welcher einen Reaktorbehälter, wenigstens eine im unteren Bereich des Reaktorbehälters angeordnete Zulaufleitung zur Zuführung des zu reinigenden Abwassers bzw. Prozesswassers, wenigstens einen im oberen Bereich des Reaktorbehälters angeordneten Klarwasserabzug zum Abführen von gereinigtem Wasser aus dem Reaktor, einen Gashauben umfassenden Gasabscheider, wenigstens eine oberhalb des Klarwasserabzugs angeordnete Gas-/Flüssig-Trenneinrichtung, wenigstens eine den Gasabscheider mit der Gas-/Flüssig-Trenneinrichtung verbindende Steigleitung und eine von der Gas-/Flüssig-Trenneinrichtung in einen unterhalb des Klarwasserabzugs liegenden Bereich des Reaktors führende Sinkleitung umfasst.

Während es sich bei Abwasser um verunreinigtes Wasser, wie Wasser aus der Kanalisation handelt, welches durch Abwasserreinigung gereinigt wird, um dadurch umweltgerecht entsorgt oder wiederverwendet werden zu können, handelt es sich bei Prozesswasser um in einer technischen Anlage im Kreislauf geführtes Wasser, welches nach einer gewissen Zeit gereinigt werden muss, um eine Anreicherung des Prozesswassers mit Störstoffen zu verhindern. Dies gilt beispielsweise und insbesondere für Prozesswasser bei der Papierherstellung, welches sowohl bei der Papierherstellung aus Frischfasern als auch insbesondere bei der Papierherstellung aus Altpapier verwendet wird.

Zur Abwasserreinigung und Prozesswasserreinigung ist eine Vielzahl von mechanischen, chemischen sowie biologischen Verfahren und entsprechende Reaktoren bekannt. Bei der biologischen Abwasserreinigung und Prozesswasserreinigung wird das zu reinigende Abwasser bzw. Prozesswasser mit aeroben oder anaeroben Mikroorganismen kontaktiert, welche die in dem Abwasser bzw. Prozesswasser enthaltenen organischen Verunreinigungen im Falle von aeroben Mikroorganismen überwiegend zu Kohlendioxid, Biomasse und Wasser und im Falle von anaeroben Mikroorganismen vorwiegend zu Kohlendioxid und Methan und nur zu einem geringen Teil zu Biomasse abbauen. Dabei werden die biologischen Abwasser- und Prozesswasserreinigungsverfahren in jüngster Zeit zunehmend mit anaeroben Mikroorganismen durchgeführt, weil bei der anaeroben Abwasser- bzw. Prozesswasserreinigung nicht unter hohem Energieaufwand Sauerstoff in den Bioreaktor eingeführt werden muss, bei der Reinigung energiereiches Biogas erzeugt wird, welches nachfolgend zur Energiegewinnung eingesetzt werden kann, und deutlich geringere Mengen an Überschussschlamm erzeugt werden. Je nach der Art und Form der eingesetzten Biomasse werden die Reaktoren für die anaerobe Abwasser- bzw. Prozesswasserreinigung in Kontaktschlammreaktoren, UASB-Reaktoren, EGSB-Reaktoren, Festbettreaktoren und Fließbettreaktoren unterteilt. Während die Mikroorganismen bei Festbettreaktoren an ortsfesten Trägermaterialien und die Mikroorganismen bei Fließbettreaktoren auf frei beweglichen, kleinem Trägermaterial anhaften, werden die Mikroorganismen bei den UASB- und EGSB-Reaktoren in Form von sogenannten Pellets eingesetzt. Im Unterschied zu UASB-(upflow anaerobic sludge blanket; anaerobe Aufströmschlammbett)-Reaktoren sind EGSB-(expanded granular sludge bed; expandierte, granuläre Schlammbett)-Reaktoren höher und weisen bei gleichem Volumen eine deutlich kleinere Grundfläche auf.

Bei den UASB- und EGSB-Reaktoren wird dem Reaktor über einen Zulauf im unteren Reaktorbereich kontinuierlich zu reinigendes Abwasser bzw. Prozesswasser zugeführt und durch ein oberhalb des Zulaufs befindliches, Mikroorganismenpellets enthaltendes Schlammbett geführt. Beim Abbau der organischen Verbindungen aus dem Abwasser bzw. Prozesswasser bilden die Mikroorganismen insbesondere Methan und Kohlendioxid enthaltendes Gas (welches auch als Biogas bezeichnet wird), das sich teilweise in Form kleiner Bläschen an den Mikroorganismenpellets anlagert und teilweise in Form freier Gasbläschen in dem Reaktor nach oben steigt. Aufgrund der angelagerten Gasbläschen sinkt das spezifische Gewicht der Mikroorganismenpellets, weshalb die Mikroorganismenpellets in dem Reaktor nach oben steigen. Um das gebildete Biogas und die aufsteigenden Mikroorganismenpellets von dem Wasser zu trennen, sind in dem mittleren und oberen Teil des Reaktors mindestens zwei voneinander in vertikaler Richtung beabstandete Gasabscheider angeordnet, welche jeweils mehrere Lagen bzw. Reihen von Gashauben umfassen. Unter dem First jeder Gashaube sammelt sich Biogas an, welches ein Gaspolster ausbildet, worunter eine Flotationsschicht aus Mikroorganismenpellets und Abwasser bzw. Prozesswasser befindlich ist. Von Gas und Mikroorganismenpellets befreites, gereinigtes Wasser steigt in dem Reaktor nach oben und wird am oberen Ende des Reaktors über einen als Überlauf ausgebildeten Klarwasserabzug abgezogen. Das unter den Firsten der Gashauben gesammelte Gas strömt über entsprechende Gasauslässe aus den Gashauben ggf. über ein oder mehrere Sammelbehälter in ein oder mehrere Steigleitungen und von dort in ein oder mehrere oberhalb des Klarwasserabzugs angeordnete Gas-/Flüssig-Trenneinrichtungen. In jeder der Gas-/Flüssig-Trenneinrichtungen wird das Gas von mitgerissenem Wasser und mitgerissenen Mikroorganismenpellets getrennt, wobei das Gas über ein oder mehrere Gasauslässe aus der entsprechenden Gas-/Flüssig-Trenneinrichtung abgezogen wird, wohingegen das verbleibende Wasser bzw. die mitgerissenen Mikroorganismenpellets aus der entsprechenden Gas-/Flüssig-Trenneinrichtung über ein oder mehrere Sinkleitungen in den unteren Bereich des Reaktors geleitet werden. Das aus der bzw. den Sinkleitung(en) unten austretende Wasser unterstützt die Vermischung des in diesem Bereich des Reaktorbehälters enthaltenden Gemisches und trägt zur Aufwärtsströmung innerhalb des Reaktorbehälters bei.

Besonders wichtig bei dem zuvor beschriebenen Verfahren ist eine - über den Reaktorquerschnitt gesehen - gleichmäßige Verteilung und Geschwindigkeit des zu reinigenden Abwassers bzw. Prozesswassers sowie eine - in vertikaler Richtung bzw. Längsrichtung des Reaktors gesehen - geeignet hohe Aufwärtsströmungsgeschwindigkeit bzw. Aufstiegsgeschwindigkeit des zu reinigenden Abwassers bzw. Prozesswassers. Eine zu hohe Aufstiegsgeschwindigkeit ist schädlich, da dann zu viele Mikroorganismenpellets in die Gashauben getrieben und über die Steigleitungen in die Gas-/Flüssig-Trenneinrichtungen geleitet werden, was die Trenneffizienz in dem Reaktor verringert. Eine zu geringe Aufstiegsgeschwindigkeit führt wiederum pro Zeitintervall zu einer verringerten Trenneffizienz in dem Reaktor, weil in dem Zeitintervall zu wenig gereinigtes Abwasser bzw. Prozesswasser über den Klarwasserabzug aus dem Reaktor abgeführt werden kann, so dass eine effiziente Abfuhr der Stoffwechselprodukte der Mikroorganismen nicht gewährleistet ist.

Ein Nachteil der bekannten Reaktoren zur anaeroben Reinigung von Abwasser und/oder Prozesswasser und insbesondere der bekannten UASB- und EGSB-Reaktoren ist, dass deren Kapazität, d.h. die pro vorgegebenem Reaktorvolumen und vorgegebenem Zeitintervall erzielte Menge von gereinigtem Abwasser bzw. Prozesswasser, verbesserungsbedürftig ist. Aus dem gleichen Grund weisen die bekannten Reaktoren zur anaeroben Reinigung von Abwasser und/oder Prozesswasser und insbesondere der bekannten UASB- und EGSB-Reaktoren, bezogen auf die pro vorgegebenem Reaktorvolumen und vorgegebenem Zeitintervall erzielte Menge von gereinigtem Abwasser bzw. Prozesswasser, vergleichsweise hohe Herstellungskosten und Wartungskosten auf.

Aufgabe der vorliegenden Erfindung ist es daher, einen Reaktor zur anaeroben Reinigung von Abwasser und/oder Prozesswasser bereitzustellen, welcher sich durch eine erhöhte Kapazität auszeichnet, und sich, bezogen auf die pro vorgegebenem Reaktorvolumen und vorgegebenem Zeitintervall erzielte Menge von gereinigtem Abwasser bzw. Prozesswasser, durch vergleichsweise niedrige Herstellungskosten und Wartungskosten auszeichnet.

Erfindungsgemäß wird diese Aufgabe durch einen Reaktor zur anaeroben Reinigung von Abwasser und/oder Prozesswasser gelöst, welcher umfasst:
a) einen Reaktorbehälter,
b) wenigstens eine im unteren Bereich des Reaktorbehälters angeordnete Zulaufleitung zur Zuführung von zu reinigendem Abwasser und/oder Prozesswasser in den Reaktor,
c) wenigstens einen im oberen Bereich des Reaktorbehälters angeordneten Klarwasserabzug zum Abführen von gereinigtem Wasser aus dem Reaktor,
d) einen in dem Reaktorbehälter angeordneten, Gashauben umfassenden Gasabscheider,
e) wenigstens eine oberhalb des Klarwasserabzugs angeordnete Gas-/Flüssig-Trenneinrichtung,
f) wenigstens eine Steigleitung, welche den Gasabscheider mit der wenigstens einen Gas-/Flüssig-Trenneinrichtung verbindet, und
g) wenigstens eine Sinkleitung, die von der Gas-/Flüssig-Trenneinrichtung in einen unterhalb des Klarwasserabzugs liegenden Bereich des Reaktors führt,
dadurch gekennzeichnet, dass der Gasabscheider mindestens vier übereinanderliegende Lagen von Gashauben umfasst und der Reaktor keinen weiteren Gasabscheider aufweist.

Indem in dem Reaktorbehälter nur ein Gasabscheider angeordnet ist, der mindestens vier übereinanderliegende Lagen von Gashauben umfasst, wobei der Gasabscheider über wenigstens eine Steigleitung mit der wenigstens einen Gas-/Flüssig-Trenneinrichtung verbunden ist, von der wenigstens eine Sinkleitung in einen unterhalb des Klarwasserabzugs liegenden Bereich des Reaktors führt, wird nicht nur eine ausgezeichnete Reinigungseffizienz erreicht, sondern insbesondere auch die Kapazität des Reaktors im Vergleich zu einem gleich großen herkömmlichen Reaktor mit mindestens zwei getrennte, voneinander in vertikaler Richtung beabstandeten Gasabscheidern um bis zu 35% erhöht, also die pro vorgegebenem Reaktorvolumen und vorgegebenem Zeitintervall erzielte Menge von gereinigtem Abwasser bzw. Prozesswasser erhöht. Aufgrund der erhöhten Kapazität kann der Reaktor, bei vorgegebener Menge an pro Zeitintervall zu reinigendem Abwasser bzw. Prozesswasser, kleiner, und zwar um bis zu 35% kleiner, ausgeführt werden. Dadurch werden nicht nur die Herstellungskosten reduziert, sondern auch die Wartungskosten während des Betriebs. Ein weiterer Vorteil des erfindungsgemä-ßen Vorsehens nur eines Gasabscheiders im Vergleich zu zwei getrennten, voneinander in vertikaler Richtung beabstandeten Gasabscheidern ist, dass die Aufstiegsgeschwindigkeit des Gemischs aus zu reinigendem Abwasser bzw. Prozesswasser und Mikroorganismen über die Höhe bzw. Länge des Reaktors gesehen im Wesentlichen gleich bleibt. Im Unterschied dazu verlangsamt sich die Aufstiegsgeschwindigkeit des Gemischs in den herkömmlichen Reaktoren mit zwei getrennten voneinander in vertikaler Richtung beabstandeten Gasabscheidern nach oben, was indirekt mit der geringeren Kapazität der herkömmlichen Reaktoren zusammenhängt..

Gemäß der vorliegenden Erfindung ist in dem unteren Bereich des Reaktorbehälters wenigstens eine Zulaufleitung zur Zuführung von zu reinigendem Abwasser und/oder Prozesswasser in den Reaktor angeordnet. Unter unterem Bereich wird in diesem Zusammenhang verstanden, dass die Zulaufleitung, an dem Reaktorbehälter von unten nach oben gesehen, in einer Höhe von 1 bis 50%, bevorzugt von 1 bis 30% und besonders bevorzugt von 1 bis 20% in den Reaktorbehälter mündet.

Vorzugsweise ist der Reaktorbehälter ein vertikaler Reaktorbehälter, also ein Reaktorbehälter, dessen Höhe, im Falle eines zylindrischen Reaktorbehälters, größer ist als dessen Durchmesser, oder dessen Höhe, im Falle quaderförmigen Reaktorbehälters, größer ist als dessen Breite und Tiefe. Vorzugsweise ist der Reaktor bzw. der Reaktorbehälter gemäß der vorliegenden Erfindung zylindrisch.

Ferner ist in dem oberen Bereich des Reaktorbehälters wenigstens ein Klarwasserabzug zum Abführen von gereinigtem Wasser aus dem Reaktor angeordnet. Unter oberem Bereich wird in diesem Zusammenhang verstanden, dass der Klarwasserabzug, in dem Reaktorbehälter von unten nach oben gesehen, in einer Höhe von 50 bis 99%, bevorzugt von 60 bis 90% und besonders bevorzugt von 70 bis 90% in dem Reaktorbehälter angeordnet ist.

Gemäß der vorliegenden Erfindung umfasst der Reaktor zur anaeroben Reinigung von Abwasser und/oder Prozesswasser genau einen in dem Reaktorbehälter angeordneten, Gashauben umfassenden Gasabscheider, aber keinen weiteren Gasabscheider. Unter Gasabscheider wird in diesem Zusammenhang jede mehrere Gashauben umfassende Anordnung verstanden, wobei die Gashauben in mehreren übereinander liegenden Lagen bzw. Reihen angeordnet sind. Dabei sind die vertikalen Abstände der Gashauben benachbarter Lagen eines Gasabscheiders im Wesentlichen gleich, d.h. die vertikalen Abstände der Gashauben benachbarter Lagen in einem Gasabscheider differieren zwischen den Lagen um nicht mehr als 50%, bevorzugt um nicht mehr als 20%, besonders bevorzugt um nicht mehr als 10%, ganz besonders bevorzugt um nicht mehr als 5% und höchst bevorzugt gar nicht. Mithin ist der Abstand zwischen der untersten ersten Lage und der darüber liegenden zweiten Lage im Wesentlichen gleich zu dem Abstand zwischen der zweiten Lage und der darüber liegenden dritten Lage und so weiter, wobei im Wesentlichen gleich, wie vorstehend erläutert, bedeutet, dass die einzelnen Abstände um nicht mehr als 50%, bevorzugt um nicht mehr als 20%, besonders bevorzugt um nicht mehr als 10%, ganz besonders bevorzugt um nicht mehr als 5% und höchst bevorzugt gar nicht differieren. Im Unterschied dazu beträgt der vertikale Abstand zwischen benachbarten Lagen von Gashauben getrennter Gasabscheider, d.h. der vertikale Abstand zwischen den Gashauben der obersten Lage eines unteren Gasabscheiders sowie den Gashauben der untersten Lage eines oberen Gasabscheiders, der bekannten Reaktorbehälter ein Vielfaches davon und in der Praxis mehr als 1.000% des vertikalen Abstands der Gashauben benachbarter Lagen eines Gasabscheiders. Zwecks Abgrenzung von mehreren Lagen eines Gasabscheiders von Lagen getrennter Gasabscheider wird hier unter getrennten Gasabscheider verstanden, dass der vertikale Abstand zwischen benachbarten Lagen von Gashauben getrennter Gasabscheider, d.h. der vertikale Abstand zwischen den Gashauben der obersten Lage eines unteren Gasabscheiders sowie den Gashauben der untersten Lage eines oberen Gasabscheiders, mehr als 50%, bevorzugt 100% oder mehr, besonders bevorzugt 200% oder mehr, ganz besonders bevorzugt 300% und höchst bevorzugt 500% oder mehr beträgt als der vertikale Abstand der Gashauben benachbarter Lagen eines Gasabscheiders,

Gute Ergebnisse werden insbesondere erhalten, wenn der Gasabscheider im mittleren oder oberen Bereich des Reaktorbehälters gemäß der vorliegenden Erfindung angeordnet ist, und zwar vorzugsweise, in dem Reaktorbehälter von unten nach oben gesehen, in einer Höhe von 50 bis 99%, bevorzugt von 60 bis 90% und besonders bevorzugt von 70 bis 90% in dem Reaktorbehälter angeordnet ist.

Vorzugsweise umfasst der Gasabscheider vier bis zwanzig, besonders bevorzugt fünf bis fünfzehn, noch weiter besonders bevorzugt sechs bis zehn, ganz besonders bevorzugt sieben bis neun und höchst bevorzugt acht übereinanderliegende Lagen von Gashauben. In jeder der Lagen des Gasabscheiders sind die einzelnen Gashauben zumindest im Wesentlichen auf der gleichen Höhe des Reaktorbehälters angeordnet bzw. die einzelnen Gashauben einer Lage erstrecken sich jeweils von ihrem unteren Ende zu ihrem oberen Ende zumindest im Wesentlichen über dieselbe Höhe des Reaktorbehälters. In diesem Zusammenhang bedeutet im Wesentlichen über dieselbe Höhe des Reaktorbehälters, dass die unteren Enden der Gashauben einer Lage sowie die oberen Enden der Gashauben einer Lage in Bezug auf deren Höhe in dem Reaktorbehälter um nicht mehr als 50%, weiter bevorzugt um nicht mehr als 30%, noch weiter bevorzugt um nicht mehr als 20%, besonders bevorzugt um nicht mehr als 10%, ganz besonders bevorzugt um nicht mehr als 5% und höchst bevorzugt um nicht mehr als 1% der Höhe einer Gashaube variieren. Dabei ist es bevorzugt, dass alle Gashauben des Gasabscheiders zumindest im Wesentlichen die gleiche Höhe aufweisen, worunter im Sinne der vorliegenden Erfindung verstanden wird, dass die Höhe jeder Gashaube um nicht mehr als 20%, bevorzugt um nicht mehr als 10%, besonders bevorzugt um nicht mehr als 5%, ganz besonders bevorzugt um nicht mehr als 1% und höchst bevorzugt gar nicht von der mittleren Höhe aller Gashauben abweicht. Die mittlere Höhe aller Gashauben ist die Summe der Höhen aller Gashauben geteilt durch die Anzahl aller Gashauben.

Die Anzahl der Gashauben pro Lage des Gasabscheiders hängt von der Querschnittsfläche des Reaktorbehälters ab und beträgt bevorzugt mindestens fünf, weiter bevorzugt mindestens zehn und besonders bevorzugt mindestens 20.

Gute Ergebnisse werden insbesondere erhalten, wenn der horizontale Abstand zwischen benachbarten Gashauben einer Lage des Gasabscheiders 10 bis 150%, besonders bevorzugt 30 bis 100% und ganz besonders bevorzugt 40 bis 80% der Breite einer Gashaube entspricht.

Gemäß einer weiteren besonders bevorzugten Ausführungsform der vorliegenden Erfindung sind die Gashauben in den übereinanderliegenden Lagen des Gasabscheiders seitlich versetzt zueinander angeordnet, und zwar vorzugsweise so, dass entlang der Längsachse des Reaktorbehälters, also im Falle des bevorzugten vertikalen Reaktorbehälters senkrecht von unten nach oben gesehen, keine senkrechte gerade Linie von dem unteren Ende des Gasabscheiders zu dem gegenüberliegenden oberen Ende des Gasabscheiders führt, ohne dass die senkrechte gerade Linie wenigstens eine Gashaube schneidet. Dadurch wird erreicht, dass in dem Reaktobehälter enthaltenes Gemisch aus Wasser, Gas und Mikroorganismenpellets nicht von unten nach oben strömen kann, ohne von unten in wenigstens eine Gashaube einzudringen. Gute Ergebnisse werden insbesondere erhalten, wenn jede der Gashauben einer Lage des Gasabscheiders in Bezug auf eine Gashaube einer darunter liegenden Lage seitlich um 20 bis 90%, besonders bevorzugt um 30 bis 80% und ganz besonders bevorzugt um 40 bis 70% der Breite einer Gashaube seitlich versetzt ist, also der horizontale Abstand zwischen jeder der Gashauben einer Lage des Gasabscheiders in Bezug auf eine Gashaube einer darunter liegenden Lage 20 bis 90%, besonders bevorzugt 30 bis 80% und ganz besonders bevorzugt 40 bis 70% der Breite einer Gashaube beträgt.

Vorzugsweise beträgt der vertikale Abstand zwischen jeder der Gashauben einer Lage des Gasabscheiders und einer Gashaube einer darunter liegenden Lage sowie der vertikale Abstand zwischen jeder der Gashauben einer Lage des Gasabscheiders und einer Gashaube einer darüber liegenden Lage jeweils 0 bis 150%, besonders bevorzugt um 1 bis 100% und ganz besonders bevorzugt um 2 bis 50% der Höhe einer Gashaube. Der vertikale Abstand ist der Abstand zwischen dem obersten Punkt einer Gashaube und dem untersten Punkt einer darüber liegenden Gashaube bzw. der Abstand zwischen dem untersten Punkt einer Gashaube und dem obersten Punkt einer darunter liegenden Gashaube.

Die Gesamthöhe des Gasabscheiders, d.h. der vertikale Abstand zwischen dem unteren Ende der untersten Gashaube des Gasabscheiders und dem oberen Ende der obersten Gashaube des Gasabscheiders, beträgt vorzugsweise 3 bis 25%, besonders bevorzugt 4 bis 20% und ganz besonders bevorzugt 5 bis 15% der Höhe des Wasserspiegels in dem Reaktorbehälter entsprechend der Höhe des Reaktors von unten bis zu dem Klarwasserabzug.

Bezüglich der Form der Gashauben ist die vorliegende Erfindung nicht besonders beschränkt. Gute Ergebnisse werden insbesondere erhalten, wenn die Gashauben, dreidimensional betrachtet, jeweils die Form eines Dreieckdachs aufweisen. Mit anderen Worten ist es bevorzugt, dass die Gashauben, zweidimensional betrachtet, jeweils, im Querschnitt von oben nach unten gesehen, dreieckig ausgestaltet sind, wobei sich die Spitze des Dreiecks, in dem Reaktorbehälter von unten nach oben betrachtet, oben befindet.

Gemäß einer alternativen, besonders bevorzugten Ausführungsform der vorliegenden Erfindung weisen die Gashauben die Form eines Dreieckdachs mit an den Traufen angebrachten, sich zumindest im Wesentlichen senkrecht nach unten erstreckenden Leisten auf. Dadurch wird effektiv erreicht, dass von unten nach oben strömendes Gemisch aus Wasser, Gas und Mikroorganismenpellets von unten in die Gashauben eintritt. Zumindest im Wesentlichen senkrecht nach unten erstreckende Leiste heißt in diesem Zusammenhang, dass sich die Leiste in einem Winkel von maximal -20° bis +20°, weiter bevorzugt von maximal -10° bis +10°, besonders bevorzugt von maximal -5° bis +5°, ganz besonders bevorzugt von maximal -1° bis +1° und höchst bevorzugt von 0° bezogen auf die Vertikale erstreckt. Dabei beträgt die Höhe jeder Leiste, d.h. deren Erstreckung in der Vertikalen, vorzugsweise 5 bis 50% und besonders bevorzugt 15 bis 30% der Höhe des Dreieckdachs. Mit anderen Worten ist es bevorzugt, dass die Gashauben, zweidimensional betrachtet, jeweils, im Querschnitt von oben nach unten gesehen, dreieckig ausgestaltet sind, wobei sich die Spitze des Dreiecks oben befindet, und wobei an jedem der beiden unteren Enden des Dreiecks eine sich zumindest im Wesentlichen senkrecht nach unten erstreckende Linie bzw. Dachtraufe angeordnet ist.

In Weiterbildung des Erfindungsgedankens wird es vorgeschlagen, dass auf dem First jeder der Gashauben jeweils eine sich zumindest im Wesentlichen senkrecht nach oben erstreckende Leiste angebracht ist, wobei zumindest im Wesentlichen senkrecht wie vorstehend definiert ist. Diese auf dem First angeordnete Leiste wird nachfolgend auch Finne genannt. Durch die Finnen auf den Firsten der Gashauben wird erreicht, dass nach oben strömende Flüssigkeit bzw. nach oben strömendes Gemisch aus Wasser, Gas und Mikroorganismenpellets vertikal nach oben geleitet wird, also Querströmung zuverlässig verhindert oder zumindest drastisch reduziert wird.

Um eine gleichmäßige Gasabfuhr von dem Gasabscheider über den gesamten Querschnitt des Reaktorbehälters zu erreichen, ist es bevorzugt, dass in dem Reaktorbehälter ein oder mehrere Sammelbehälter angeordnet sind, welche das Gas aus den einzelnen Gashauben sammeln, bevor das gesammelte Gas über die wenigstens eine Steigleitung in die wenigstens eine Gas-/Flüssig-Trenneinrichtung aufsteigt. In diesem Fall sind die einzelnen Gashauben über den wenigstens einen Sammelbehälter und die wenigstens eine Steigleitung mit der wenigstens einen Gas-/Flüssig-Trenneinrichtung verbunden, was unter die vorstehende Formulierung fällt, dass die wenigstens eine Steigleitung jeden Gasabscheider mit der wenigstens einen Gas-/Flüssig-Trenneinrichtung verbindet. Mithin bedeutet, dass die wenigstens eine Steigleitung jeden Gasabscheider mit der wenigstens einen Gas-/Flüssig-Trenneinrichtung verbindet, dass die wenigstens eine Steigleitung direkt oder indirekt, d.h. über eine andere Vorrichtung, wie beispielsweise über einen Sammelbehälter, jeden Gasabscheider mit der wenigstens einen Gas-/Flüssig-Trenneinrichtung verbindet.

Gute Ergebnisse werden insbesondere erzielt, wenn in dem Reaktorbehälter ein oder mehrere Sammelbehälter angeordnet sind, wobei zumindest ein Teil der Gashauben und besonders bevorzugt alle Gashauben an jeweils einer ihrer beiden Stirnseiten mit einem Sammelbehälter verbunden sind und/oder zumindest ein Teil der Gashauben an jeweils beiden ihrer beiden Stirnseiten mit jeweils einem Sammelbehälter verbunden ist. Zu diesem Zweck ist es bevorzugt, wenn die mit einem Sammelbehälter verbundene(n) Stirnseite(n) der Gashauben offen sind, also nicht von einer Wandung begrenzt sind, oder von einer eine Durchtrittsöffnung aufweisenden Wandung begrenzt sind. Zudem weist jeder Sammelbehälter an dem Verbindungsbereich mit einer Stirnseite einer Gashaube eine Durchtrittsöffnung auf, so dass Gas mit ggf. mitgerissenem Wasser und Mikroorganismen aus der Gashaube über die Durchtrittsöffnung hindurch in den Sammelbehälter strömen kann.

Durch den wenigstens einen Sammelbehälter können auch ein oder mehrere Sinkleitungen fluiddicht nach unten führen, d.h. in dieser Ausführungsform kann Fluid weder aus dem Sammelbehälter in die ein oder mehreren Sinkleitungen flie-ßen noch umgekehrt Fluid aus den ein oder mehreren Sinkleitungen in den Sammelbehälter fließen. Vielmehr dient der Sammelbehälter in dieser Ausführungsform lediglich als Gerüst bzw. Fixierung für die ein oder mehreren Sinkleitungen.

In Weiterbildung des Erfindungsgedankens wird es vorgeschlagen, dass die ein oder mehreren Sammelbehälter quaderförmig sind. Ein solcher quaderförmiger Sammelbehälter umfasst eine untere offene Grundfläche sowie eine obere, durch eine Wand verschlossene Grundfläche, zwei gegenüberliegende, jeweils durch eine ggf. mit Öffnungen versehene Wand verschlossene Stirnflächen und zwei gegenüberliegende, jeweils durch eine Wand verschlossene Seitenflächen, wobei die Seitenflächen eine größere Fläche aufweisen als die Stirnflächen. Vorzugsweise ist dieser quaderförmige Sammelbehälter so angeordnet, dass die obere Grundfläche und untere Grundfläche horizontal, d.h. parallel zu einer Querschnittsfläche des Reaktorbehälters, angeordnet sind und sich die beiden Seitenflächen über wenigstens 50%, bevorzugt über wenigstens 70% und besonders bevorzugt über wenigstens 80% des Abstandes zwischen einer Seite der Reaktorbehälterinnenwand und der gegenüberliegenden Seite der Reaktorbehälterinnenwand erstrecken. Zumindest eine der beiden Seitenflächen und bevorzugt beide Seitenflächen des Sammelbehälters sind jeweils mit Stirnseiten von Gashauben verbunden, wobei in dem Verbindungsbereich zwischen der Stirnseite jeder der Gashauben und der entsprechenden Seitenfläche des Sammelbehälters ein oder mehrere Durchtrittsöffnungen vorgesehen sind, so dass Gas mit ggf. mitgerissenem Wasser und Mikroorganismen aus jeder der Gashauben über die Durchtrittsöffnungen hindurch in den Sammelbehälter strömen kann.

Gemäß einer weiteren bevorzugten Ausführungsform der vorliegenden Erfindung sind in dem Reaktorbehälter ein bis vier und bevorzugt zwei Sammelbehälter angeordnet, welche jeweils bevorzugt quaderförmig ausgestaltet sind, wobei die beiden Sammelbehälter auf derselben Höhe des Reaktorbehälters parallel sowie in Abstand zueinander angeordnet sind, wobei jeweils Gashauben zwischen den beiden Sammelbehältern und an den gegenüberliegenden Seiten der Sammelbehälter angeordnet sind, so dass jeder Sammelbehälter an zwei gegenüberliegenden Seitenflächen mit Gashauben verbunden ist. Die beiden Sammelbehälter sind vorzugsweise wie vorstehend beschrieben ausgestaltet. Beispielsweise sind beide Sammelbehälter in demselben Abstand zu dem Mittelpunkt des Reaktorbehälters angeordnet, wobei sich die beiden Seitenflächen der Sammelbehälter jeweils über wenigstens 50%, bevorzugt über wenigstens 70% und besonders bevorzugt über wenigstens 80% des Abstandes zwischen einer Seite der Reaktorbehälterinnenwand und der gegenüberliegenden Seite der Reaktorbehälterinnenwand erstrecken. Zwischen den jeweils zu dem, im Querschnitt des zylindrischen Reaktorbehälters gesehen, Mittelpunkt des Reaktorbehälters gerichteten Seitenflächen beider Sammelbehälter erstrecken sich Gashauben, die mit ihren beiden Stirnseiten jeweils mit einer der Seitenflächen der Sammelbehälter verbunden sind. Diese Gashauben erstrecken sich entweder von einer Seitenfläche eines Sammelbehälter zu der gegenüberliegenden Seitenfläche des anderen Sammelbehälters oder zwischen diesen beiden Seitenflächen der Sammelbehälter erstrecken sich jeweils ein Paar benachbarter Gashauben, also zwei benachbarte Gashauben, zwischen denen auf den den Seitenflächen der Sammelbehälter gegenüberliegenden Stirnseiten der Gashauben ein Abstand besteht. Diese beabstandeten Stirnseiten der Gashauben sind vorzugsweise durch eine Wandung verschlossen, so dass kein Wasser bzw. Gemisch aus Wasser, Gas und Mikroorganismen aus den betreffenden Stirnseiten der Gashauben austreten kann.

Um eine gute Trenneffizienz zu erreichen, ist es bevorzugt, wenn sich die Sammelbehälter und Gashauben, im Querschnitt des Reaktorbehälters gesehen, über zumindest im Wesentlichen den gesamten Querschnitt des Reaktorbehälters erstrecken. Vorzugsweise erstrecken sich die Sammelbehälter und Gashauben, im Querschnitt des Reaktorbehälters gesehen, über zumindest 50%, weiter bevorzugt über zumindest 80%, besonders bevorzugt über zumindest 90%, ganz besonders bevorzugt über zumindest 95% des Reaktorbehälterquerschnitts und höchst bevorzugt über den gesamten Reaktorbehälterquerschnitt.

Um eine weitere Erhöhung der Kapazität des Reaktors bezogen auf eine vorgegebene Reaktorhöhe und einen vorgegebenen Reaktorquerschnitt zu erreichen, wird es in Weiterbildung des Erfindungsgedankens vorgeschlagen, dass das untere Ende des Reaktorbehälters zumindest abschnittsweise kegelförmig oder kegelstumpfförmig ausgestaltet ist. Dadurch wird im Vergleich zu einem zylindrischen Reaktorbehälter eine bessere Durchmischung der Nahrungszufuhr zu den Mikroorganismen und eine besser konzentrierte Selektion des schweren Schlammes zwecks gezielter Entfernung aus dem Reaktor erreicht, wodurch der kegelförmige bzw. kegelstumpfförmige Zulaufbereich zu einer optimalen Nutzung der theoretischen Reaktorkapazität und dadurch zu einer Erhöhung der Kapazität des Reaktors führt. Besonders bevorzugt ist das untere Ende des Reaktorbehälters zumindest abschnittsweise kegelstumpfförmig ausgestaltet, was gegenüber einer kegelförmigen Ausgestaltung bei gleiche Reaktorhöhe mehr Betriebsvolumen bereitstellt.

Gute Ergebnisse werden insbesondere erhalten, wenn sich der kegelförmige oder kegelstumpfförmige Bereich in dem Reaktorbehälter, vom Boden des Reaktorbehälters nach oben gesehen, über 1 bis 20% und bevorzugt 3 bis 10% der Höhe des Reaktorbehälters erstreckt. Der im Vergleich zu einem entsprechend dimensionierten Zylinder, also einem Zylinder mit dem Durchmesser entsprechend dem größten Durchmesser des Kegelstumpfs und mit einer Höhe entsprechend der Höhe des Kegelstumpfs, offene Bereich des Kegels oder Kegelstumpfs kann zur mechanischen Stabilisierung mit einem Material, wie beispielsweise Beton, ausgefüllt sein.

Zudem hat es sich als vorteilhaft erwiesen, wenn der kegelförmige oder kegelstumpfförmige untere Bereich des Reaktorbehälters maximal 70%, bevorzugt maximal 60% und besonders bevorzugt maximal 50% des Volumens eines sich über dieselbe Höhe mit dem maximalen Durchmesser des kegelförmigen oder kegelstumpfförmigen Bereichs erstreckenden Zylinders aufweist.

Bezüglich der Ausgestaltung des wenigstens einen Klarwasserabzugs zum Abführen von gereinigtem Wasser aus dem Reaktor ist die vorliegende Erfindung nicht besonders beschränkt. Gute Ergebnisse werden insbesondere erhalten, wenn der wenigstens eine im oberen Bereich des Reaktorbehälters angeordnete Klarwasserabzug kreisringförmig oder als konvexes Polygon ausgestaltet ist. Unter einem konvexen Polygon wird ein Polygon verstanden, bei dem jeder Innenwinkel zwischen benachbarten Segmenten des Polygons kleiner als 180° beträgt. Vorzugsweise erstreckt sich der kreisringförmige oder konvex polygone Klarwasserabzug konzentrisch oder zumindest im Wesentlichen konzentrisch um die Mittelachse des Reaktorbehälters.

Ferner ist es bevorzugt, dass der wenigstens einen Klarwasserabzug in dem Reaktorbehälter, vom Boden des Reaktorbehälters nach oben gesehen, in einem Bereich zwischen 60 und 95% und bevorzugt zwischen 75 und 90% der Höhe des Reaktorbehälters angeordnet ist. Besonders bevorzugt umfasst der Reaktorbehälter einen wie zuvor beschriebenen Klarwasserabzug. Es können aber alternativ dazu in dem Reaktorbehälter auch zwei oder mehr Klarwasserabzüge vorhanden sein, die sich jeweils auf derselben Höhe des Reaktorbehälters befinden oder vertikal versetzt zueinander angeordnet sind.

Gemäß einer weiteren bevorzugten Ausführungsform der vorliegenden Erfindung beträgt der vertikale Abstand zwischen dem oberen Ende des Gasabscheiders, d.h. zwischen dem obersten Ende einer Gashaube der obersten Lage des Gasabscheiders, und dem unteren Ende des Klarwasserabzugs 1 bis 20%, vorzugsweise 2 bis 15% und besonders bevorzugt 3 bis 12% der Höhe des Wasserspiegels in dem Reaktorbehälter entsprechend der Höhe des Reaktors von unten bis zu dem Klarwasserabzug.

In Weiterbildung des Erfindungsgedankens wird es vorgeschlagen, dass der wenigstens eine im oberen Bereich des Reaktorbehälters angeordnete Klarwasserabzug als Überlauf ausgebildet ist. Um dies zu erreichen, kann der kreisringförmige oder konvex polygonale Klarwasserabzug aus einer oben offenen Rinne oder einem oben offenen Rohr mit beispielsweise U-förmigen oder V-förmigen Querschnitt ausgebildet sein. Dabei ist es wichtig, dass der Klarwasserabzug 30, 30' so gestaltet ist, dass er flächenproportional über den Reaktorquerschnitt das geklärte Wasser abzieht und eine Querschnittserweiterung der Abzugsrinne / des Abzugsrohrs in Fließrichtung stattfindet, so dass trotz zunehmender Abflussmenge quasi eine gleichbleibende Abflussgeschwindigkeit resultiert.

Gemäß der vorliegenden Erfindung umfasst der Reaktor wenigstens eine Steigleitung, welche den Gasabscheider mit der wenigstens einen Gas-/Flüssig-Trenneinrichtung verbindet. In Tendenz ist die Anzahl der Steigleitungen vorzugsweise umso größer desto größer die Reaktorquerschnittsfläche ist. Gute Ergebnisse werden insbesondere erzielt, wenn der Reaktor zwei bis sechs, weiter bevorzugt drei bis fünf und besonders bevorzugt vier Steigleitungen aufweist. Bei kleineren Reaktoren können aber auch zwei Steigleitungen ausreichend sein. Wenn der Reaktor zwei oder mehr Steigleitungen umfasst, ist es bevorzugt, dass die Steigleitungen konzentrisch um die Reaktorlängsachse angeordnet sind.

Die Anzahl der Gas-/Flüssig-Trenneinrichtungen ist vorzugsweise gleich zu der Anzahl der Steigleitungen, wobei jeweils eine Steigleitung mit einer Gas-/Flüssig-Trenneinrichtung verbunden ist. Allerdings ist es auch möglich, zwei Steigleitungen mit einer Gas-/Flüssig-Trenneinrichtung zu verbinden.

Gemäß einer weiteren bevorzugten Ausführungsform der vorliegenden Erfindung ist der Reaktorbehälter soweit mit Flüssigkeit bzw. Gemisch aus Wasser, Gasblasen und Mikroorganismenpellets befüllt und ist die Länge der wenigstens einen Steigleitung so bemessen, dass die wenigstens eine Steigleitung mit der oberen geschlossenen Grundfläche des Sammelbehälters verbunden ist und die wenigstens eine Steigleitung nicht bis zu dem außerhalb der wenigstens einen Steigleitung vorliegenden Flüssigkeitsspiegel mit Flüssigkeit befüllt ist, sondern der Flüssigkeitsspiegel innerhalb der wenigstens einen Steigleitung tiefer als der außerhalb der wenigstens einen Steigleitung vorliegende Flüssigkeitsspiegel liegt, wobei das Verhältnis I geteilt durch O 1,0 bis 6,0, bevorzugt 2,0 bis 4,0 und besonders bevorzugt 2,0 bis 3,0, wie ungefähr 2,5, beträgt. Dabei ist I die Länge der wenigstens einen Steigleitung, welche sich zwischen dem Anschluss der wenigstens einen Steigleitung an der oberen geschlossenen Grundfläche des Sammelbehälters und dem außerhalb der wenigstens eine Steigleitung vorliegenden Flüssigkeitsspiegel erstreckt, wohingegen O die Länge der wenigstens einen Steigleitung ist, die sich oberhalb des außerhalb der wenigstens einen Steigleitung vorliegenden Flüssigkeitsspiegels erstreckt. Mithin ist auch die mit der wenigstens einen Steigleitung verbundene Gas-Flüssig-Trenneinrichtung oberhalb des außerhalb der wenigstens einen Steigleitung vorliegenden Flüssigkeitsspiegels angeordnet.

Dadurch wird erreicht, dass durch den Mammutpumpeneffekt Gas aus den Gashauben über die Sammelbehälter und die Steigleitungen in die Gas-/Flüssig-Trenneinrichtungen aufsteigt und Flüssigkeit aus den Gas-/Flüssig-Trenneinrichtungen durch die Sinkleitungen nach unten fließt.

Zudem ist es bevorzugt, dass das Verhältnis I geteilt durch T 0,4 bis 1,0, bevorzugt 0,5 bis 0,9 und besonders bevorzugt 0,6 bis 0,8, wie ungefähr 0,7, beträgt. Dabei ist T die Länger der Mammutpumpe bzw. Steigleitung ist, d.h. die Summe aus I plus O.

Gemäß der vorliegenden Erfindung umfasst der Reaktor wenigstens eine Sinkleitung, die von der Gas-/Flüssig-Trenneinrichtung in einen unterhalb des Klarwasserabzugs liegenden Bereich des Reaktors führt. Vorzugsweise umfasst der Reaktor eine bis sechs, besonders bevorzugt zwei bis fünf und ganz besonders bevorzugt drei bis vier Sinkleitungen. Wenn der Reaktor zwei oder mehr Sinkleitungen umfasst, ist es bevorzugt, dass die Sinkleitungen konzentrisch um die Reaktorlängsachse angeordnet sind.

Gute Ergebnisse werden insbesondere erzielt, wenn sich jede der wenigstens einen Sinkleitung bis in die unteren 30%, weiter bevorzugt in die unteren 20% und bevorzugt in die unteren 10% des Reaktorbehälters erstreckt. Vorzugsweise mündet jede der Austrittsöffnungen der Sinkleitungen 0 bis 5 Meter, besonders bevorzugt 0,5 bis 3 Meter und besonders bevorzugt 1 bis 2 Meter oberhalb der Höhe des Zulaufverteilers bzw. der diesen ausbildenden Ablenkmittel, wo die rückgeführte Suspension aus Mikroorganismenpellets und Abwasser mit dem dem Reaktor über die Zulaufleitungen zugeführten Abwasser vermischt und in eine kreisförmige Strömung versetzt wird.

Gemäß einem weiteren Aspekt betrifft die vorliegende Erfindung ein Verfahren zur anaeroben Reinigung von Abwasser, bei dem der wenigstens einen Zulaufleitung eines zuvor beschriebenen Reaktors zu reinigendes Abwasser und/oder Prozesswasser zugeführt wird, aus der wenigstens einen Gas-/Flüssig-Trenneinrichtung Gas abgeführt wird und aus dem wenigstens einen Klarwasserabzug gereinigtes Wasser aus dem Reaktor abgeführt wird.

Gemäß einer besonders bevorzugten Ausführungsform der vorliegenden Erfindung, wird der Reaktorbehälter soweit mit Flüssigkeit befüllt ist und wird die Länge der wenigstens einen Steigleitung so bemessen, dass die wenigstens eine Steigleitung mit ihrem unteren Teil mit der oberen geschlossenen Grundfläche des Sammelbehälters verbunden ist und die wenigstens eine Steigleitung nicht bis zu dem außerhalb der wenigstens einen Steigleitung vorliegenden Flüssigkeitsspiegel mit Flüssigkeit befüllt ist, sondern der Flüssigkeitsspiegel innerhalb der wenigstens einen Steigleitung tiefer als der außerhalb der wenigstens einen Steigleitung vorliegende Flüssigkeitsspiegel liegt, wobei das Verhältnis I geteilt durch O 1,0 bis 6,0, bevorzugt 2,0 bis 4,0 und besonders bevorzugt 2,0 bis 3,0, wie etwa 2,5, beträgt. Dabei ist I wiederum die Länge der wenigstens einen Steigleitung, welche sich zwischen dem Anschluss der wenigstens einen Steigleitung an der oberen geschlossenen Grundfläche des Sammelbehälters und dem außerhalb der wenigstens eine Steigleitung vorliegenden Flüssigkeitsspiegel erstreckt, wohingegen O die Länge der wenigstens einen Steigleitung ist, die sich oberhalb des außerhalb der wenigstens einen Steigleitung vorliegenden Flüssigkeitsspiegels erstreckt.

Nachfolgend wird die vorliegende Erfindung rein beispielhaft anhand vorteilhafter Ausführungsformen und unter Bezugnahme auf die beigefügten Zeichnungen beschrieben.

Dabei zeigen:
- Fig. 1: eine schematische Längsschnittsansicht eines Reaktors zur anaeroben Reinigung von Abwasser gemäß eines ersten Ausführungsbeispiels der vorliegenden Erfindung,
- Fig. 2a bis 2c: Detailansichten von Abschnitten des Gasabscheiders des in der Figur 1 gezeigten Reaktors und
- Fig. 3: eine Detailansicht einer Ausführungsform eines Klarwasserabzugs des in der Figur 1 gezeigten Reaktors.
- Fig. 4: eine Detailansicht des sich während des Betriebs des in der Figur 1 gezeigten Reaktors in den Steigleitungen einstellenden Flüssigkeitsspiegels.
- Fig. 5a bis 5d: schematische Draufsichten von Klarwasserabzügen gemäß anderen Ausführungsbeispielen.

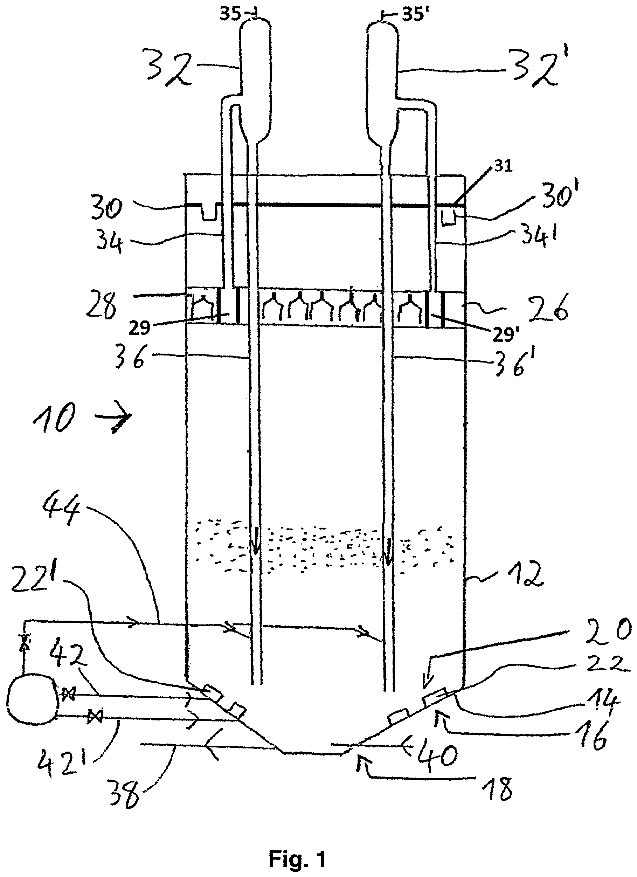

Der in der Fig. 1 schematisch im Längsschnitt dargestellte Reaktor 10 zur anaeroben Reinigung von Abwasser und/oder Prozesswasser umfasst einen Reaktorbehälter 12, der in seinem mittleren und oberen Teil zylindrisch ausgestaltet ist und sich in seinem unteren Teil 14 kegelstumpfförmig ausgestaltet ist. An dem oberen Abschnitt 16 des kegelstumpfförmigen Teils 14 des Reaktorbehälters 12 befindet sich ein Zulaufverteiler 20, der aus einer Vielzahl von an der Innenwand des Reaktorbehälters 12 befestigten Ablenkmitteln 22, 22' besteht, welche sich von der Reaktorwand aus in einem gewissen Winkel erstrecken und darunter befindliche, in der Wand des Reaktorbehälters 12 vorgesehene Schlitze (nicht dargestellt) überdecken.

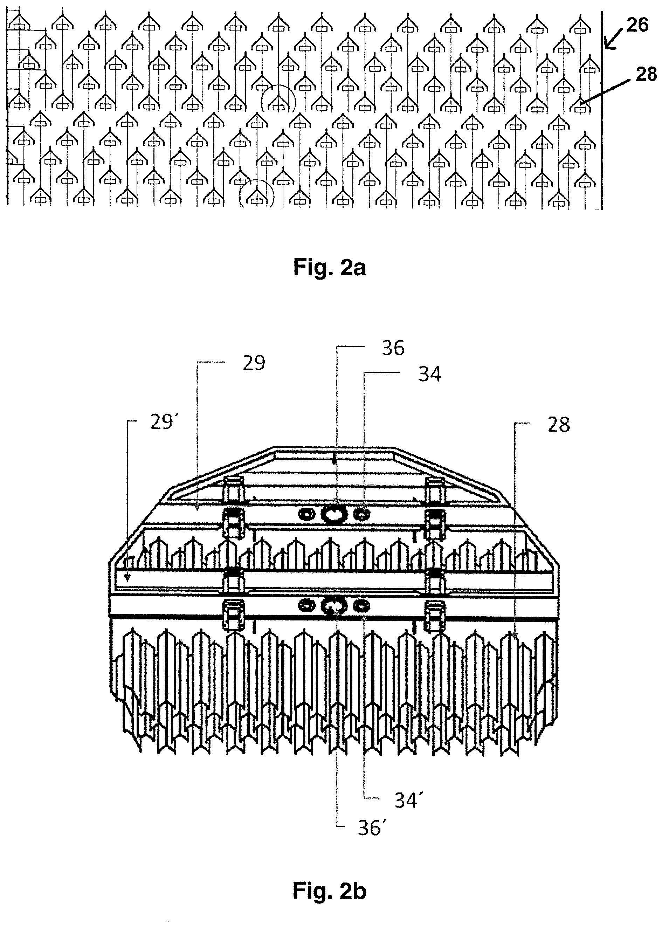

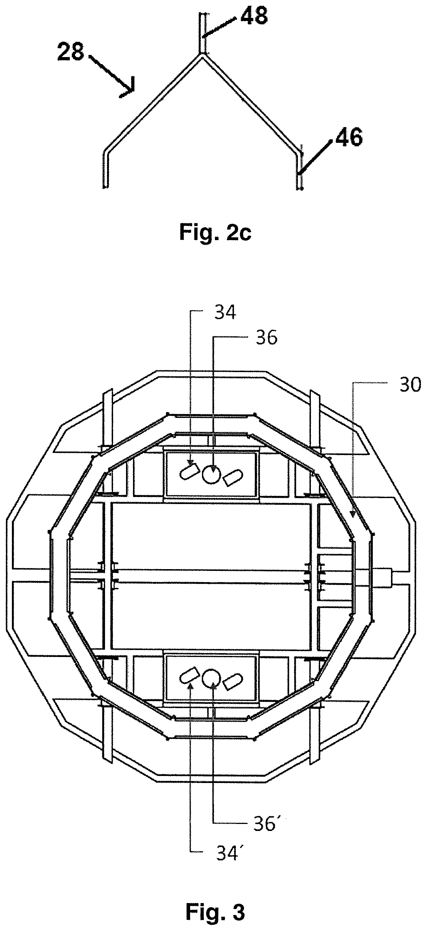

In dem oberen Teil des Reaktorbehälters 12 befindet sich ein Gasabscheider 26, welcher eine Vielzahl von Gashauben 28 umfasst, welche, wie im Detail in der Figur 2 gezeigt, in zehn Lagen vertikal übereinander angeordnet sind. Aus Einfachheitsgründen ist in der Figur 1 der Gasabscheider 26 nur sehr schematisch dargestellt. Zudem sind in dem Reaktorbehälter 12 zwei Sammelbehälter 29, 29' vorgesehen, die als Teil des Gasabscheiders 26 angesehen werden können und im Detail in der Figur 2b, in welcher nur die oberen fünf der zehn Lagen von Gashauben 28 dargestellt sind, gezeigt sind. Oberhalb des Gasabscheiders 26 befindet sich ein, im Detail in der Figur 3 dargestellter, in Draufsicht konvex polygonal ausgestalteter Klarwasserabzug 30, 30' in Form einer offenen Rinne. Der Klarwasserabzug 30, 30' fungiert als Überlauf, so dass über diesen das gereinigte Wasser aus dem Reaktor 10 abgezogen werden kann. Bei dem Betrieb des Reaktors 10 liegt mithin der Flüssigkeitsspiegel 31 in dem Reaktorbehälter auf der Höhe des oberen Endes des Klarwasserabzugs 30, 30'. Dabei ist es wichtig, dass der Klarwasserabzug 30, 30' so gestaltet ist, dass er flächenproportional über den Reaktorquerschnitt das geklärte Wasser abzieht und eine Querschnittserweiterung der Abzugsrinne / des Abzugsrohrs in Fließrichtung stattfindet, so dass trotz zunehmender Abflussmenge quasi eine gleichbleibende Abflussgeschwindigkeit resultiert.

Auf dem Reaktor 10 sind zwei Gas-/Flüssig-Trenneinrichtungen 32, 32' angeordnet, die mit den Sammelbehältern 29, 29' jeweils über zwei Steigleitungen 34, 34' verbunden sind und jeweils an ihrem Kopfende eine Gasauslassleitung 35, 35' aufweisen. Zwei der Steigleitungen 34, 34' sind hintereinander angeordnet, weswegen in der Figur 1 von den insgesamt vier Steigleitungen 34, 34' nur zwei Steigleitungen 34, 34' zu sehen sind. Zudem führt von dem Boden jeder der beiden Gas-/Flüssig-Trenneinrichtungen 32 jeweils eine Sinkleitung 36, 36' in den unteren Teil des Reaktors 10.

Des Weiteren befindet sich im unteren Teil des Reaktors 10, nämlich im unteren Abschnitt 18 des Kegelstumpfs, eine Abfuhrleitung 38 sowie eine Zufuhrleitung 40, wobei über die Abfuhrleitung 38 Feststoffe bzw. eine Suspension aus Feststoff und Flüssigkeit aus dem Reaktor 10 abgezogen werden können und über die Zufuhrleitung 40 Flüssigkeit zum Spülen des unteren Reaktorbehälterteils 14 eingeführt werden kann. Schließlich sind in dem Reaktor 10 mehrere Zulaufleitungen 42, 42' vorgesehen, die zu den einzelnen Ablenkmitteln 22, 22' führen, von denen der Übersicht halber in der Fig. 1 nur einige dargestellt sind. Zudem ist in dem Reaktor 10 eine Zulaufleitung 44 vorgesehen, welche jeweils in das untere Ende der Sinkleitungen 36, 36' mündet.

Wie im Detail in den Figuren 2a bis 2c gezeigt, weist der Gasabscheider 26 zehn Lagen Gashauben 28 auf, wobei die Gashauben 28 in den übereinanderliegenden Lagen des Gasabscheiders 26 seitlich versetzt zueinander angeordnet, und zwar so, dass - entlang der Längsachse des Reaktorbehälters 12 senkrecht von unten nach oben gesehen - keine senkrechte gerade Linie von dem unteren Ende des Gasabscheiders 26 zu dem gegenüberliegenden oberen Ende des Gasabscheiders 26 führt, ohne dass die senkrechte gerade Linie wenigstens eine Gashaube 28 schneidet. Dabei weisen die Gashauben 28 jeweils die Form eines Dreieckdachs mit an den Traufen angebrachten, sich zumindest im Wesentlichen senkrecht nach unten erstreckenden Leisten 46 auf, wobei zudem auf dem First jeder der Gashauben 28 jeweils eine sich zumindest im Wesentlichen senkrecht nach oben erstreckende Leiste bzw. Finne 48 angebracht ist. Zudem sind in dem Reaktorbehälter 12 zwei Sammelbehälter 29, 29' vorgesehen, die jeweils quaderförmig ausgestaltet sind. Dabei ist jede Gashaube 28, die zwischen den beiden Sammelbehältern 29, 29' angeordnet ist, mit ihren beiden Stirnseiten mit einer Seitenflächen je eines Sammelbehälters 29, 29' verbunden, wohingegen die übrigen Gashauben jeweils mit einer ihrer beiden Stirnseiten mit einer Seitenfläche eines Sammelbehälters 29, 29' verbunden sind. In dem Verbindungsbereich zwischen der Stirnseite jeder der Gashauben 28 und der entsprechenden Seitenfläche des Sammelbehälters 29, 29' ist eine Durchtrittsöffnung (nicht dargestellt) oder sind mehrere Durchtrittsöffnungen (nicht dargestellt) vorgesehen, so dass Gas mit ggf. mitgerissenem Wasser und Mikroorganismenpellets aus jeder der Gashauben 28 über die Durchtrittsöffnung(en) hindurch in den entsprechenden Sammelbehälter 29, 29' strömen kann. Von jedem der beiden Sammelbehälter 29, 29' führen jeweils zwei Steigleitungen 34, 34' nach oben in die beiden Gas-/Flüssig-Trenneinrichtungen 32 und jeweils eine Sinkleitung 36, 36' in den unteren Bereich des Reaktorbehälters 12.

Wie im Detail in der Figur 3 gezeigt, ist der Klarwasserabzug 30, 30' als oben offene Rinne - in Draufsicht - polygonal konvex ausgestaltet.

Bei dem Betrieb des Reaktors 10 wird über die Zulaufleitungen 42, 42' zu reinigendes Abwasser durch die in der Wand des Reaktorbehälters 12 in den Reaktorbehälter 12 eingeführt und durch die Ablenkmittel 22, 22' so abgelenkt, dass das zugeführte Abwasser zu einer, vom Reaktorquerschnitt aus gesehen, kreisförmigen Strömung umgelenkt wird. Dadurch kommt es zu einer innigen Vermischung zwischen dem zugeführten Abwasser und dem in dem Reaktor 10 befindlichen Medium, welches aus bereits teilweise gereinigtem Abwasser, Mikroorganismenpellets, welche in der Fig. 1 durch kleine Punkte angedeutet sind, und kleinen Gasbläschen besteht. Das eingeführte Abwasser strömt von dem Zulaufverteiler 20 in dem Reaktorbehälter 12 langsam aufwärts, bis es in die mikroorganismenhaltige Schlammpellets enthaltende Fermentationszone gelangt. Die in den Mikroorganismenpellets enthaltenen Mikroorganismen zersetzen die in dem Abwasser enthaltenen organischen Verunreinigungen hauptsächlich zu Methan- und Kohlendioxidgas. Durch die erzeugten Gase entstehen Gasbläschen, von denen sich die größeren von den Mikroorganismenpellets ablösen und in Form von Gasblasen durch das Medium perlen, wohingegen kleine Gasbläschen an den Schlammpellets haften bleiben. Diejenigen Mikroorganismenpellets, an denen kleine Gasbläschen anhaften und welche daher ein geringeres spezifisches Gewicht als die anderen Mikroorganismenpellets und das Wasser aufweisen, steigen in dem Reaktorbehälter 12 auf, bis sie den Gasabscheider 26 erreichen.

Die freien Gasbläschen fangen sich in den Gashauben 28 und bilden unter dem First der Gashauben 28 ein Gaspolster. Direkt unterhalb des Gaspolsters bildet sich eine Flotationsschicht bestehend aus Mikroorganismenpellets mit daran anhaftenden kleinen Gasbläschen. Das in den Gashauben 28 gesammelte Gas sowie Mikroorganismenpellets und Wasser aus der Flotationsschicht werden über die offene Stirnseite der Gashauben 28 aus den Gashauben 28 in den zugeordneten Sammelbehälter 29, 29' abgeführt und von dort über eine zugeordnete Steigleitung 34, 34' in die zugeordnete Gas-/Flüssig-Trenneinrichtung 32, 32' geführt, wohingegen das nunmehr gereinigte Wasser von dem Gasabscheider 26 weiter nach oben steigt, bis es über den Klarwasserabzug 30, 30' aus dem Reaktor 10 abgezogen und durch eine Wasserabfuhrleitung (nicht dargestellt) abgeleitet wird.

In jeder der beiden Gas-/Flüssig-Trenneinrichtungen 32 trennt sich das Gas von dem restlichen Wasser und den Mikroorganismenpellets, wobei die Suspension aus Mikroorganismenpellets und dem Abwasser über die entsprechende Sinkleitung 36, 36' in den Reaktorbehälter 12 rezirkuliert wird. Dabei mündet die Austrittsöffnung der Sinkleitung 36 1 bis 2 Meter oberhalb der Höhe der Ablenkmittel 22, 22', wo die rückgeführte Suspension aus Mikroorganismenpellets und Abwasser mit dem dem Reaktor 10 über die Zulaufleitungen 42, 42' zugeführten Abwasser vermischt und in eine kreisförmige Strömung versetzt wird, wonach der Kreislauf von neuem beginnt. Über die Zulaufleitung 44 kann der Sinkleitung 36 bei Bedarf kontinuierlich oder diskontinuierlich zu reinigendes Abwasser, gereinigtes Abwasser oder Frischwasser zugeführt werden, um die durch die Sinkleitung 36 in den Reaktor 10 zurückgeführte Suspension zu verdünnen und so eine Verstopfung der Sinkleitung 36 zu verhindern.

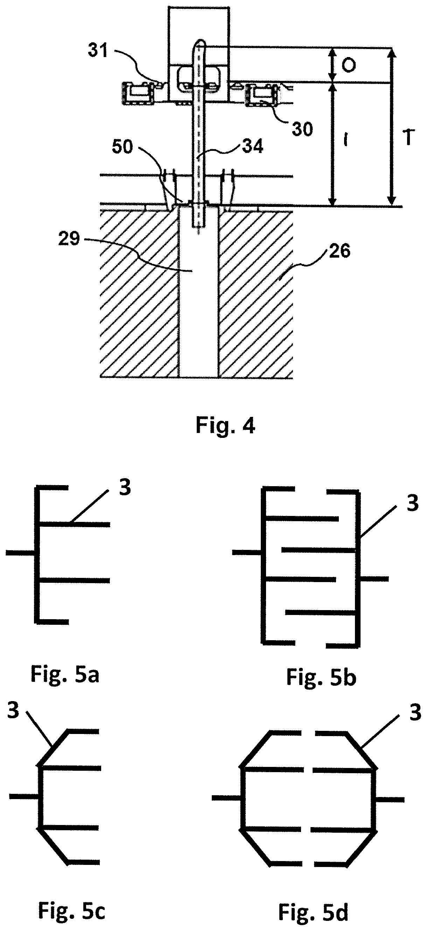

Während der Betriebs des Reaktors 10 ist der Reaktorbehälter 12 soweit mit Flüssigkeit bzw. Gemisch aus Wasser, Gasblasen und Mikroorganismenpellets befüllt und ist die Länge der Steigleitungen 34, 34' jeweils so bemessen, dass jede der Steigleitungen 34, 34'mit ihrem unteren Teil mit der oberen geschlossenen Grundfläche des Sammelbehälters 29 verbunden ist und die entsprechende Steigleitung 34, 34' nicht bis zu dem außerhalb der wenigstens einen Steigleitung 29 vorliegenden Flüssigkeitsspiegel 31 mit Flüssigkeit befüllt ist, sondern der Flüssigkeitsspiegel 50 innerhalb der wenigstens einen Steigleitung tiefer als der außerhalb der wenigstens einen Steigleitung 29 vorliegende Flüssigkeitsspiegel 31 liegt, wobei das Verhältnis I geteilt durch O 1,0 bis 6,0, bevorzugt 2,0 bis 4,0 und besonders bevorzugt 2,0 bis 3,0, wie ungefähr 2,5, beträgt. Wie in der Figur 4 gezeigt, ist dabei I die Länge der entsprechenden Steigleitung 34, 34', welche sich zwischen dem Anschluss an der oberen geschlossenen Grundfläche des Sammelbehälters 29 und dem außerhalb der entsprechende Steigleitung 34, 34' vorliegenden Flüssigkeitsspiegel 31 erstreckt, wohingegen O die Länge der entsprechenden Steigleitung 34, 34' ist, die sich oberhalb des außerhalb der entsprechenden Steigleitung 34, 34' vorliegenden Flüssigkeitsspiegels erstreckt. Die Summe aus I und O ist in der Figur 4 als T bezeichnet.

In den Figuren 5a bis 5 sind schematische Draufsichten von Klarwasserabzügen gemäß anderen Ausführungsbeispielen, alsdem in der Figur 3 gezeigten, dargestellt.

### Bezugszeichenliste

- 10: Reaktor
- 12: Reaktorbehälter
- 14: unterer, kegelstumpfförmiger Reaktorbehälterteil
- 16: oberer Abschnitt des kegelstumpfförmigen Reaktorbehälterteils
- 18: unterer Abschnitt des kegelstumpfförmigen Reaktorbehälterteils
- 20: Zulaufverteiler
- 22, 22': Ablenkmittel
- 26: Gasabscheider
- 28: Gashaube
- 29, 29': Sammelbehälter
- 30, 30': Klarwasserabzug
- 31: Flüssigkeitsspiegel in dem Reaktorbehälter
- 32,32': Gastrenneinrichtung
- 34, 34`: Steigleitung
- 35, 35`: Gasauslassleitung
- 36, 36`: Sinkleitung
- 38: Abfuhrleitung
- 40: Zufuhrleitung zur Spülung
- 42, 42': Zulaufleitung zum Ablenkmittel
- 44: Zulaufleitung zu der Sinkleitung
- 46: Leiste einer Gashaube
- 48: Finne einer Gashaube
- 50: Anschluss der Steigleitung an der oberen geschlossene Grundfläche des Sammelbehälters

- I: Länge der wenigstens einen Steigleitung, welche sich zwischen dem Anschluss an der oberen geschlossenen Grundfläche des Sammelbehälters und dem außerhalb der wenigstens eine Steigleitung vorliegenden Flüssigkeitsspiegel erstreckt
- O: Länge der wenigstens einen Steigleitung, die sich oberhalb des außerhalb der wenigstens einen Steigleitung vorliegenden Flüssigkeitsspiegels erstreckt.
- T: Summe aus I und O

## Patentansprüche

1. Reaktor (10) zur anaeroben Reinigung von Abwasser und/oder Prozesswasser, welcher umfasst:
a) einen Reaktorbehälter (12),
b) wenigstens eine im unteren Bereich des Reaktorbehälters (12) angeordnete Zulaufleitung (42, 42') zur Zuführung von zu reinigendem Abwasser und/oder Prozesswasser in den Reaktor (10),
c) wenigstens einen im oberen Bereich des Reaktorbehälters (12) angeordneten Klarwasserabzug (29, 29') zum Abführen von gereinigtem Wasser aus dem Reaktor (10),
d) einen in dem Reaktorbehälter (12) angeordneten, Gashauben (28) umfassenden Gasabscheider (26),
e) wenigstens eine oberhalb des Klarwasserabzugs (29, 29') angeordnete Gas-/Flüssig-Trenneinrichtung (32, 32'),
f) wenigstens eine Steigleitung (34, 34'), welche den Gasabscheider (26) mit der wenigstens einen Gas-/Flüssig-Trenneinrichtung (32, 32') verbindet, und
g) wenigstens eine Sinkleitung (36, 36'), die von der Gas-/Flüssig-Trenneinrichtung (32, 32')in einen unterhalb des Klarwasserabzugs (29, 29') liegenden Bereich des Reaktors (10) führt,
**dadurch gekennzeichnet, dass** der Gasabscheider (26) mindestens vier übereinanderliegende Lagen von Gashauben (28) umfasst und der Reaktor (10) keinen weiteren Gasabscheider (26) aufweist.

2. Reaktor (10) nach Anspruch 1, **dadurch gekennzeichnet, dass** der Gasabscheider (26) vier bis zwanzig, bevorzugt fünf bis fünfzehn, besonders bevorzugt sechs bis zehn, ganz besonders bevorzugt sieben bis neun und höchst bevorzugt acht übereinanderliegende Lagen von Gashauben (28) umfasst.

3. Reaktor (10) nach Anspruch 1 oder 2, **dadurch gekennzeichnet, dass** die Gashauben (28) in den übereinanderliegenden Lagen des Gasabscheiders (26) seitlich versetzt zueinander angeordnet sind, so dass entlang der Längsachse des Reaktorbehälters (12) gesehen, keine senkrechte, gerade Linie von dem einen unteren Ende des Gasabscheiders (26) zu dem gegenüberliegenden oberen Ende des Gasabscheiders (26) führt, ohne dass die senkrechte, gerade Linie wenigstens eine Gashaube (28) schneidet.

4. Reaktor (10) nach einem der vorstehenden Ansprüche, **dadurch gekennzeichnet, dass** die Gashauben (28) jeweils die Form eines Dreieckdachs mit an den Traufen angebrachten, sich senkrecht nach unten erstreckenden Leisten (46) aufweisen.

5. Reaktor (10) nach Anspruch 4, **dadurch gekennzeichnet, dass** auf dem First jeder der Gashauben (28) jeweils eine sich senkrecht nach oben erstreckende Leiste (48) angebracht ist.

6. Reaktor (10) nach einem der vorstehenden Ansprüche, **dadurch gekennzeichnet, dass** in dem Reaktorbehälter (12) ein oder mehrere Sammelbehälter (29, 29') angeordnet sind, wobei zumindest ein Teil der Gashauben (28) an jeweils mindestens einer der beiden Stirnseiten mit einer der ein oder mehreren Sammelbehälter (29, 29') verbunden ist, und, wobei jede der ein oder mehreren Sammelbehälter (29, 29') mit wenigstens einer Steigleitung (34, 34') verbunden ist.

7. Reaktor (10) nach Anspruch 6, **dadurch gekennzeichnet, dass** in dem Reaktorbehälter (12) ein bis vier und bevorzugt zwei Sammelbehälter (29, 29') angeordnet sind, welche jeweils bevorzugt nach unten offen quaderförmig ausgestaltet sind, wobei die beiden Sammelbehälter (29, 29') parallel sowie in Abstand zueinander angeordnet sind, wobei jeweils Gashauben (28) zwischen den beiden Sammelbehältern (29, 29') und an den gegenüberliegenden Seiten der Sammelbehälter (29, 29') angeordnet sind, so dass jeder Sammelbehälter (29, 29') an zwei gegenüberliegenden Seitenflächen mit Gashauben (28) verbunden ist.

8. Reaktor (10) nach Anspruch 6 oder 7, **dadurch gekennzeichnet, dass** sich die Sammelbehälter (29, 29') und Gashauben (28), im Querschnitt des Reaktorbehälters (12) gesehen, über zumindest im Wesentlichen den gesamten Querschnitt des Reaktorbehälters (12) erstrecken.

9. Reaktor (10) nach einem der vorstehenden Ansprüche, **dadurch gekennzeichnet, dass** das untere Ende des Reaktorbehälters (12) zumindest abschnittsweise kegelförmig oder kegelstumpfförmig ausgestaltet ist, wobei sich vorzugsweise der kegelförmige oder kegelstumpfförmige Bereich, vom Boden des Reaktorbehälters (12) nach oben gesehen, über 1 bis 20% und bevorzugt 3 bis 10% der Höhe des Reaktorbehälters (12) erstreckt.

10. Reaktor (10) nach einem der vorstehenden Ansprüche, **dadurch gekennzeichnet, dass** der wenigstens eine im oberen Bereich des Reaktorbehälters (12) angeordnete Klarwasserabzug (29, 29') kreisringförmig oder als konvexes Polygon ausgestaltet ist, wobei vorzugsweise der wenigstens eine im oberen Bereich des Reaktorbehälters (12) angeordnete Klarwasserabzug (29, 29') als Überlauf ausgebildet ist.

11. Reaktor (10) nach einem der vorstehenden Ansprüche, **dadurch gekennzeichnet, dass** der Reaktor (10) zwei bis sechs Steigleitungen (34, 34') und eine halbe Anzahl von Gas-/Flüssig-Trenneinrichtungen (32, 32') aufweist, wobei jeweils zwei Steigleitungen (34, 34') mit einer Gas-/Flüssig-Trenneinrichtung (32, 32') verbunden sind.

12. Reaktor (10) nach einem der vorstehenden Ansprüche, **dadurch gekennzeichnet, dass** der Reaktorbehälter (12) soweit mit Flüssigkeit befüllt ist und die Länge der wenigstens einen Steigleitung (34, 34') so bemessen ist, dass die wenigstens eine Steigleitung (34, 34') mit der oberen geschlossenen Grundfläche des Sammelbehälters (29) verbunden ist und die wenigstens eine Steigleitung (34, 34') nicht bis zu dem außerhalb der wenigstens einen Steigleitung (34, 34') vorliegenden Flüssigkeitsspiegel (31) mit Flüssigkeit befüllt ist, sondern der Flüssigkeitsspiegel (50) innerhalb der wenigstens einen Steigleitung (34, 34') tiefer als der außerhalb der wenigstens einen Steigleitung vorliegende Flüssigkeitsspiegel (31) liegt, wobei das Verhältnis I geteilt durch O 1,0 bis 6,0, bevorzugt 2,0 bis 4,0 und besonders bevorzugt 2,0 bis 3,0 beträgt, wobei I die Länge der wenigstens einen Steigleitung (34, 34') ist, welche sich zwischen dem Anschluss an der oberen geschlossenen Grundfläche des Sammelbehälters (29) und dem außerhalb der wenigstens eine Steigleitung (34, 34') vorliegenden Flüssigkeitsspiegel (31) erstreckt, und O die Länge der wenigstens einen Steigleitung (34, 34') ist, die sich oberhalb des außerhalb der wenigstens einen Steigleitung (34, 34') vorliegenden Flüssigkeitsspiegels erstreckt.

13. Reaktor (10) nach einem der vorstehenden Ansprüche, **dadurch gekennzeichnet, dass** der Reaktor 1 bis 6, bevorzugt 2 bis 5 und besonders bevorzugt 3 bis 4 Sinkleitungen (36, 36') aufweist.

14. Verfahren zur anaeroben Reinigung von Abwasser, **dadurch gekennzeichnet, dass** der wenigstens einen Zulaufleitung eines Reaktors (10) nach einem der vorstehenden Ansprüche zu reinigendes Abwasser und/oder Prozesswasser zugeführt wird, aus der wenigstens einen Gas-/Flüssig-Trenneinrichtung Gas abgeführt wird und aus dem wenigstens einen Klarwasserabzug gereinigtes Wasser aus dem Reaktor (10) abgeführt wird.

15. Verfahren nach Anspruch 14, **dadurch gekennzeichnet, dass** der Reaktorbehälter (12) soweit mit Flüssigkeit befüllt wird und die Länge der wenigstens einen Steigleitung (34, 34') so bemessen wird, dass die wenigstens eine Steigleitung (34, 34') mit der oberen geschlossenen Grundfläche des Sammelbehälters (29) verbunden ist und die wenigstens eine Steigleitung (34, 34') nicht bis zu dem außerhalb der wenigstens einen Steigleitung (34, 34') vorliegenden Flüssigkeitsspiegel (31) mit Flüssigkeit befüllt ist, sondern der Flüssigkeitsspiegel (50) innerhalb der wenigstens einen Steigleitung (34, 34') tiefer als der außerhalb der wenigstens einen Steigleitung vorliegende Flüssigkeitsspiegel (31) liegt, wobei das Verhältnis I geteilt durch O 1,0 bis 6,0, bevorzugt 2,0 bis 4,0 beträgt und besonders bevorzugt 2,0 bis 3,0 beträgt, wobei I die Länge der wenigstens einen Steigleitung (34, 34') ist, welche sich zwischen dem Anschluss an der oberen geschlossenen Grundfläche des Sammelbehälters (29) und dem außerhalb der wenigstens eine Steigleitung (34, 34') vorliegenden Flüssigkeitsspiegel (31) erstreckt, und O die Länge der wenigstens einen Steigleitung (34, 34') ist, die sich oberhalb des außerhalb der wenigstens einen Steigleitung (34, 34') vorliegenden Flüssigkeitsspiegels erstreckt.
